# EUROPEAN PATENT APPLICATION

(11) **EP 3 133 313 A1**
(43) Date of publication of application: **22.02.2017**
(21) Application number: 16001579.8
(22) Date of filing: 15.07.2016
(51) Int. Cl.: F16F 15/12

(54) **TORSIONAL VIBRATION DAMPER**

(30) Priority: 11.08.2015 GB 201514150
(71) Applicant: Raicam Clutch Limited, West Midlands B3 2AS (GB)
(72) Inventor: Cogzell, Rodney, Coventry, West Midlands CV3 5NQ (GB); Sheerin, Anthony Mark, Leamington Spa, CV31 3QP (GB); Struve, Benjamin Chetwood, Kenilworth, CV8 2GN (GB)
(74) Representative: Morrall, Roger

(57) **Abstract**

A torsional vibration damper arrangement for transmitting drive between first and second rotatable driveline components, the damper being mounted on the first component via a plurality of flexible mounting straps disposed generally circumferentially about the rotation axis of the components. Each strap is connected adjacent its ends to the damper or the first component and at an intermediate location to the other of the first component or damper so that torque can be transmitted between the damper and first component by placing half of each strap in tension depending on the direction of transmission of the torque whilst allowing the damper to swash relative to the first component as drive is transmitted through the driveline.

## Description

This invention relates to torsional vibration dampers for use in vehicle drivelines.

Such dampers are well known and conventionally comprise, for example, input and output members connected in the torque path between adjacent components of a vehicle driveline with spring means acting between the input and output members to allow the input and output members to rotate relative to each other to damp torsional vibrations in the driveline.

Although such dampers can operate reasonable satisfactorily in many applications problems can arise when the damper is required to connect two driveline components whose relative axes of rotation are less well controlled, for example, when the damper input is connected to an engine flywheel and the damper output is connected with a long drive shaft powering a rear axle of the vehicle. In such applications the input and output member of the damper tend to swash or tip relative to each other and this can lead to high stresses in the damper leading to premature damper or damper mounting failure particularly when high power drivelines are involved.

It is an object of the present invention to provide an improved form of torsional vibration damping arrangement which assists in overcoming the above swashing problem.

Thus, according to the present invention there is provided a torsional vibration damper arrangement for transmitting drive between first and second rotatable driveline components, the damper being mounted on the first component via a plurality of flexible mounting straps disposed generally circumferentially about the rotation axis of the components, each strap being connected adjacent its ends to the damper or the first component and at an intermediate location to the other of the first component or damper so that torque can be transmitted between the damper and first component by placing half of each strap in tension depending on the direction of transmission of the torque whilst allowing the damper to swash relative to the first component as drive is transmitted through the driveline.

Typically for a driveline with a maximum expected torque capacity of say 700Nm the straps will have a thickness of 1mm with outer mounting holes adjacent its ends for mounting on the damper or driveline component and a further mounting hole at its intermediate location for mounting on the other of the driveline component or damper with a length of 85mm between the outer mounting holes.

The use of thin straps lowers the level of stress in the straps during flexing due to swashing.

This strap mounting arrangement provides a very tuneable set up as two or more straps can be used at some or all of the strap locations one strap on top of the other to provide the necessary resistance to swashing without inducing high levels of stress in the straps. For example, the use of three straps one on top of each other will induce much less stress than using a strap three times as thick.

Also, keeping the length of the straps short means that the straps are less likely to buckle.

The straps may be straight in form or slightly curved to match the shape of the damper/ first or second components.

Conveniently the damper and adjacent connected component are recessed in the vicinity of the connections with the straps to allow the component and damper to move towards each other during swashing.

The damper may have an outer peripheral flange portion for connection with the associated first or second component, an inner hub portion for connection with the other of the first or second components, and spring means acting between the flange and hub portions to resist relative rotation between the first and second components and hence damp torsional vibrations in the driveline.

In such an arrangement the outer peripheral flange 'portion is provided with the recesses to allow swashing.

The present invention will now be described, by way of example only, with reference to the accompanying drawings in which:-
Figure 1 shows diagrammatically a vehicle driveline provided with a torsional vibration damper arrangement in accordance with the present invention;
Figure 2 shows a perspective view of the damper arrangement used in Figure 1 mounted on a flywheel of the vehicle;
Figure 3 shows a view of the damper arrangement in the direction of arrow A of figure 2;
Figure 4 shows a radial perspective view in the direction of the arrow B of Figure 2;
Figure 5 shows Figure 4 in an exploded form;
Figure 6 shows an orthogonal radial view in the direction of arrow B, and
Figure 7 shows a plan view in the direction of arrow C in Figure 2.

A vehicle 10 has a driveline comprising an engine 11 driving a flywheel 12 which is connected to a drive shaft 13 via a torsional damper 14. Drive shaft 13 in turn drives a transmission unit 15, which may include a main drive clutch or a torque converter, and a differential 15a which form part of the vehicle's back axle arrangement and which drives rear wheels 16.

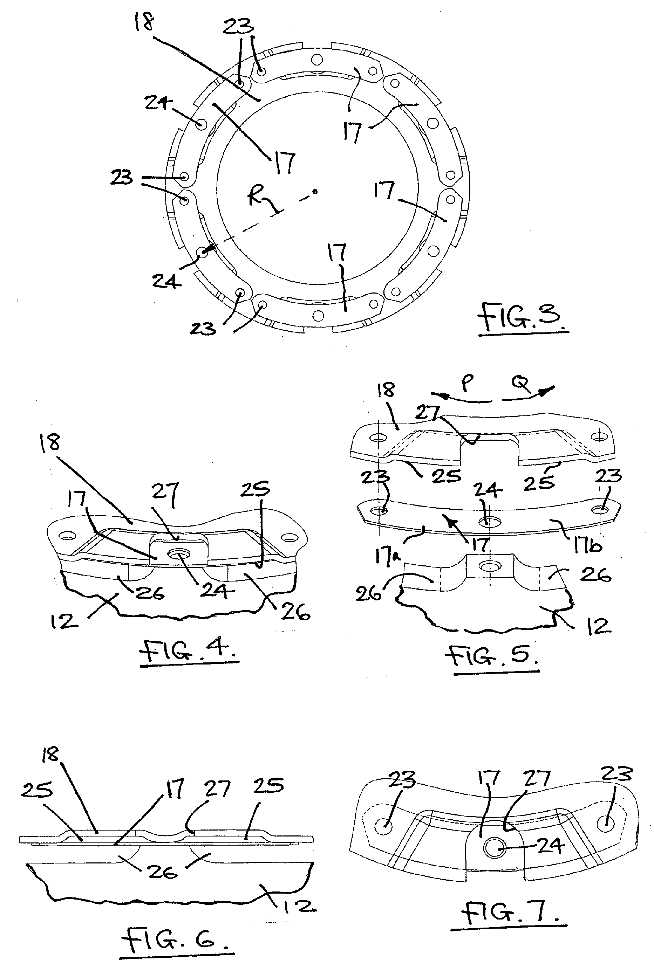

In accordance with the present invention the damper 14 is mounted on the flywheel 12 via a plurality of flexible mounting straps 17 shown in greater detail in Figure 3 to 7.

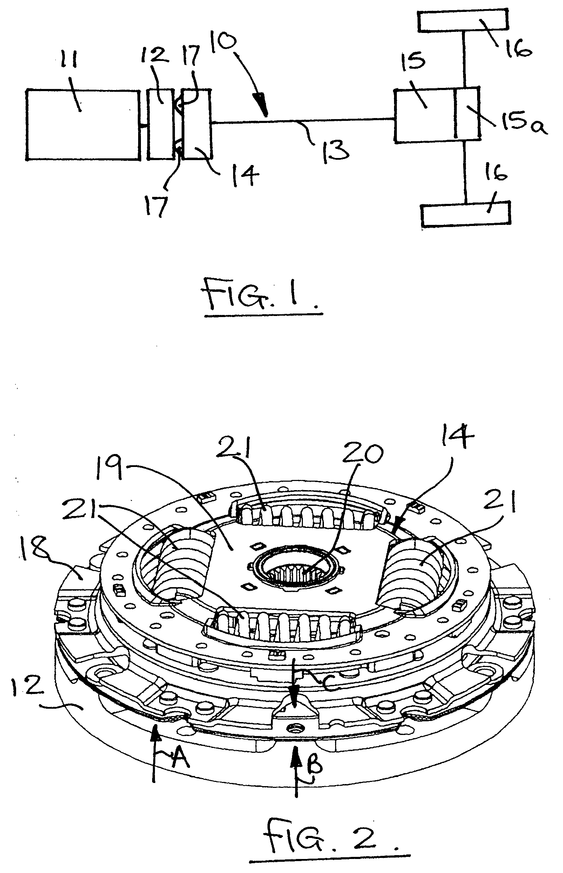

In the particular damper arrangement shown in Figure 2 the damper has an outer peripheral flange 18 which is connected with the mounting straps 17 and an inner hub portion 19 which has a central splined connection 20 for connection with a splined portion (not shown) on the end of drive shaft 13. Springs 21 act between the flange 18 and hub potion 19 to resist relative rotation between the flange and splined connection 20 to damp torsional vibrations in the driveline in a known manner. As the details of the damper construction itself do not form part of the present invention no further details will be given in the description. Any of the many known forms of torsional damper may be used. It is the connection of the damper to the flywheel which is the inventive concept of the present invention.

As can be seen from Figures 3 to 7, the flexible mounting straps 17 are disposed generally circumferentially about the rotation axis 22 of the components at a radius R (see Figure 3). Each strap 17 is provided with holes 23 adjacent its ends for connecting to the damper peripheral flange 18 and a hole 24 intermediate its ends for connecting to the flywheel 12. The hole 24 is central but may be offset from the centre if required. Rivets or bolts or any other convenient fastening can be used through holes 23 and 24. Straps 17 thus transmit torque between the damper and the flywheel by placing half of each strap in tension and the other half in compression depending on the direction of transmission of the torque whilst allowing the damper to swash relative to the flywheel as drive is transmitted through the driveline. Thus if torque is being transmitted from the engine through the damper in direction P of Figure 5 the portion 17b of the straps 17 is in tension and if the torque is being transmitted in the opposite direction Q the portion 17a of the straps is in tension.

The damper flange 18 is recessed at locations 25 adjacent mounting holes 23 and the flywheel 12 is also recessed at locations 26 either side of the strap mounting holes 24 to allow the flywheel and damper to move towards each other during swashing. Cut outs 27 are also provided in the flange 18 in line with mounting holes 24 to give access to the mounts and also give added clearance for swashing.

Typically for a driveline with a maximum expected torque capacity of say 700Nm the straps 17 will have a thickness of 1mm with the outer mounting holes 23 adjacent its ends being 85mm apart and lying on a radius R of 100mm.

The use of thin straps lowers the level of stress in the straps during flexing due to swashing and makes the arrangement very tuneable. For example, two or more straps can be used at some or all of the strap locations one strap on top of the other to provide the necessary resistance to swashing without inducing high levels of stress in the straps. The use of three straps one on top of each other will induce much less stress than using a strap three times as thick. Also, keeping the length of the straps short means that the straps are less likely to buckle.

The straps may be straight in form or slightly curved to match the shape of the damper/ first or second components.

Although in the above arrangement the straps are used to mount the damper onto the flywheel via the input member (the flange 18) of the damper it will be understood that with suitable adaption the straps could, as an alternative, be used to connect the output member (the hub portion 19) to the drive shaft 13. Also, it is possible in certain application that straps could be used to connect both the input and output members of the damper to the flywheel 12 and shaft 13.

## Claims

1. A torsional vibration damper arrangement (14) for transmitting drive between first and second rotatable driveline components (12,13), the damper being **characterised in that** it is mounted on the first component (12) via a plurality of flexible mounting straps (17) disposed generally circumferentially about the rotation axis of the components, each strap (17) being connected (23) adjacent its ends to the damper (14) or the first component (12) and at an intermediate location (24) to the other of the first component or damper so that torque can be transmitted between the damper and first component by placing half (17a, 17b) of each strap in tension depending on the direction of transmission of the torque whilst allowing the damper (14) to swash relative to the first component (12) as drive is transmitted through the driveline.

2. A damper arrangement according to claim 1 **characterised in that** the damper (14) is also connected with the second component (13) via a second plurality of circumferentially disposed flexible mounting straps also mounted adjacent their ends on the damper (14) or second component (13) and at an intermediate location on the other of the second component (13) or damper (14).

3. A damper arrangement according to claim 1 or 2 **characterised in that** two or more straps (17) are used at some or all of the strap locations one strap on top of the other.

4. A damper arrangement according to any one of claims 1 to 3 **characterised in that** the straps (17) are slightly curved to match the shape of the damper/ first or second components.

5. A damper arrangement according to any one of claims 1 to 4 **characterised in that** the damper (14) and adjacent connected component (12) are recessed (25, 26) in the vicinity of the connections (23, 24) with the straps (17) to allow the component (12) and damper (14) to move towards each other during swashing.

6. A damper arrangement according to any one of claims 1 to 5 **characterised in that** the damper (14) has an outer peripheral flange portion (18) for connection with the associated first (12) or second (13) component, an inner hub portion (19) for connection with the other of the first (12) or second (13) components, and spring means (21) acting between the flange and hub portions (18, 19) to resist relative rotation between the first and second components and hence damp torsional vibrations in the driveline.

7. A damper arrangement according to claims 5 and 6 **characterised in that** the outer peripheral flange portion (18) is provided with the recesses (25) to allow swashing.
